# EUROPÄISCHE PATENTANMELDUNG

(11) **EP 2 570 210 A1**
(43) Veröffentlichungstag der Anmeldung: **20.03.2013**
(21) Anmeldenummer: 12184424.5
(22) Anmeldetag: 14.09.2012
(51) Int. Cl.: B23B 27/14

(54) **Schneidplatte zum Kopierdrehen**

(30) Priorität: 17.09.2011 DE 202011105832 U
(71) Anmelder: Kemmer Hartmetallwerkzeuge GmbH, 72218 Wildberg (DE)
(72) Erfinder: Selle, Norbert, 98544 Zella-Mehlis (DE)
(74) Vertreter: Dreiss

(57) **Zusammenfassung**

Die Erfindung betrifft eine Stechdrehplattemit einer Schneidengeometrie, die es erlaubt durch Umschleifen der Stechdrehplatte eine Schneidplatte (1) zum Kopierdrehen herzustellen. Die erfindungsgemäße Schneidplatte (1) zum Kopierdrehen umfasst einen Grundkörper (4), zwei Seitenflächen (6,7), einer Oberseite (2), einer Unterseite (5) und zwei Stirnflächen (3), wobei eine Hauptschneide (8) durch die Schnittkante zwischen der Oberseite (2) und einer Stirnfläche (3) gebildet wird, wobei die Nebenschneiden (9,10) zumindest näherungsweise parallel zu einer Längsachse der Schneidplatte (1) verlaufen, wobei in einem Winkel (α) zu einer Nebenscheide (9,10) eine weitere Schneide (17) vorhanden ist, und dass ein Schnittpunkt zwischen Nebenschneide )9,10) und weiterer Schneide (17) im Bereich der Schnittkante zwischen der Oberseite (2) und der Stirnfläche (3) liegt.

## Beschreibung

Die Erfindung betrifft eine Schneidplatte zum Kopierdrehen.

Schneidplatten zum Kopierdrehen sind an sich bekannt. Sie werden häufig als flache Schneidplatten mit einer zentralen Befestigungsbohrung ausgebildet. Mit ihrer Unterseite liegen diese Schneidplatten auf einer entsprechend gestalteten Aufnahmefläche des Werkzeughalters auf und werden durch die zentrale Befestigungsschraube fixiert. Dies bedeutet, dass zu dieser Kopierschneidplatte ein spezieller Werkzeughalter mit einem Befestigungsgewinde und einer Aufnahmefläche erforderlich ist.

Aus der DE 298 07 877 U1 ist eine Schneidplatte bekannt, die sich beim Stechdrehen sehr bewährt hat. Bei Schneidplatten, die zum Stechdrehen eingesetzt werden, werden die schneidplatten nicht mit einer zentralen Befestigungsschraube im Werkzeughalter fixiert, sondern die Schneidplatten werden in dem Werkzeughalter zwischen einer Oberseite und einer Unterseite der Schneidplatte geklemmt. Die Schneidplatte zum Stechdrehen ist im Querschnitt schmal und hoch und nicht, wie herkömmliche Kopierplatten, eher flach und breit.

Der Erfindung liegt die Aufgabe zu Grunde, eine Schneidplatte zum Kopierdrehen bereit zu stellen, die natürlich gute Zerspanungseigenschaften hat, kostengünstig herstellbar ist und mit einer Schneidplatte zum Stechdrehen kompatibel ist, sodass erstens die Herstellungskosten minimiert werden und zweitens der gleiche Werkzeughalter eingesetzt werden kann.

Diese Aufgabe wird bei einer Schneidplatte zum Kopierdrehen mit einem Grundkörper, zwei Seitenflächen, einer Oberseite, und einer Unterseite, und zwei Stirnflächen, wobei eine Hauptschneide durch die Schnittkante zwischen der Oberseite und einer Stirnfläche gebildet wird, wobei die Nebenschneiden zumindest nährungsweise parallel zu einer Längsachse der Schneidplatte verlaufen und wobei die Schneidplatte durch eine Klemmung zwischen Oberseite und Unterseite an einem Werkzeughalter fixierbar ist, erfindungsgemäß dadurch gelöst, dass in einem Winkel α zu einer Nebenschneide eine weitere Schneide vorgesehen ist, und dass ein Schnittpunkt zwischen Nebenschneide und weiterer Schneide im Bereich der Schnittkante zwischen der Oberseite und der Stirnfläche liegt.

Erfindungsgemäß ist es somit möglich, durch Umschleifen einer herkömmlichen Schneidplatte zum Stechdrehen eine Schneidplatte zum Kopierdrehen herzustellen. Weil sich das Umschleifen oder Umarbeiten einer handelsüblichen Schneidplatte zum Stechdrehen sich lediglich auf den Bereich der Hauptschneide und einer Nebenschneide beschränkt, bleibt der zentrale Teil des Grundkörpers unverändert, sodass für beide Schneidplatten der gleiche Werkzeughalter eingesetzt werden kann. Dadurch ergeben sich erhebliche Rationalisierungseffekte.

Ein Teil der Rationalisierungseffekte betrifft die Herstellung der erfindungsgemäßen Schneidplatten. Diese können durch nachträgliches Umarbeiten, insbesondere durch Schleifen mit Diamantkörnern als Schneidstoff, hergestellt werden. Dies bedeutete, dass keine neue oder geänderte Pressform zum Sintern der erfindungsgemäßen Schneidplatte erforderlich ist.

Des Weiteren ist es möglich, beispielsweise Schneidplatten, deren eine Nebenschneide mangelhaft ist, zu einer makellosen erfindungsgemäßen Schneidplatte zum Kopierdrehen umzuarbeiten. Beim Umarbeiten einer Schneidplatte zum Stechdrehen in eine erfindungsgemäße Schneidplatte zum Kopierdrehen wird nämlich eine Nebenschneide vollständig durch Schleifen abgetragen, sodass eventuelle Fehlstellen im Bereich dieser Nebenschneide für die fertige Schneidplatte zum Kopierdrehen ohne Bedeutung sind. Dadurch kann die Ausschussquote verringert und die Ausbringung erhöht werden.

Ein weiterer wesentlicher Vorteil ist auf der Anwenderseite zu sehen. Der Anwender kann nämlich mit einem und dem gleichen Werkzeughalter sowohl Stechdrehen als auch Kopierdrehen. Dies verringert die erforderliche Zahl von Werkzeughaltern und hilft dadurch auch im erheblichen Maße Kosten einzusparen.

Zum Kopierdrehen haben sich Winkel zwischen der stehengebliebenen Nebenschneide und der weiteren Schneide bewährt, die kleiner als 60° sind und bevorzugt gleich 55, 35° oder gleich 25° sind. Es empfiehlt sich bei diesem Winkel darauf zu achten, dass ein mit den einschlägigen DIN oder ISO Standards/Normen kompatibler Winkel gewählt wird. Dies bedeutet, dass die in der Oberseite der des Rohlings ausgeformten Vertiefungen zwei Funktionen haben, je nachdem ob die Schneidplatte zum Stechdrehen oder zum Kopierdrehen eingesetzt wird.

Wenn die Schneidplatte zum Stechdrehen eingesetzt wird, dann leiten und verformen die Vertiefungen den entstehenden Span und sorgen für einen guten Spanfluß. Dies ist besonders wichtig bei schwer zerspanbaren und zähen Werkstoffen.

Die erfindungsgemäße schneidplatte kann zum Zerspanen von schwer zerspanbaren Werkstoffen, Stellite, Inconel, verschiedenen Buntmetallen, Leichtmetallen (z. B. Aluminium und Al-Legierungen), Kunststoffen, Gummi und anderen exotischen Materialien eingesetzt werden.

Wenn die Schneidplatte zum Kopierdrehen eingesetzt wird, dann entsteht durch das erfindungsgemäße Umschleifen aus einer solchen Vertiefung eine Nebenschneide.

In vielen Anwendungsfällen hat es sich als vorteilhaft erwiesen, die Oberfläche der Schneidplatte zumindest bereichsweise zu polieren, so dass der Spanfluss verbessert und die Lebensdauer erhöht wird.

Je nach Anwendungsfall und zu bearbeitendem Werkstoff können die Hauptschneide und/oder die Nebenschneide scharf geschliffen oder auch leicht verrundet werden.

Ein weiterer Vorteil der erfindungsgemäßen Schneidplatte ist darin zu sehen, dass an beiden Enden der Schneidplatte eine erfindungsgemäße Schneide zum Kopierdrehen ausgebildet ist. Dadurch ist es möglich an einer Schneidplatte zwei Schneiden zum Kopierdrehen bereitzustellen, sodass nach dem Verschleiß der ersten Schneide durch Umdrehen der Schneidplatte eine weitere Schneide zur Verfügung steht.

Um die erfindungsgemäße Schneidplatte an der Unterseite und auch an der Oberseite klemmen zu können ist an der Oberseite eine Spannrippe ausgebildet, die bevorzugt einen kreisbogenförmigen oder sinusförmigen Querschnitt aufweist. An der Unterseite hat sich als vorteilhaft erwiesen eine V-förmige Kontur auszubilden, die in eine entsprechend geformte trapezförmige oder V-förmige Nut im Werkzeughalter zusammenwirkt.

Die Spannrippe an der Oberseite und die V-förmige Kontur an der Unterseite ermöglichen ein sicheres, präzises und extrem belastbares Klemmen der Schneidplatte, sodass auch die beim Kopierdrehen zwangsläufig auftretenden seitlichen Kräfte sicher von der Schneidplatte in den Werkzeughalter eingeleitet werden können, ohne dass es zu Relativbewegungen zwischen Schneidplatte und Werkzeughalter kommt.

Um eine besonders präzise Positionierung der Schneidplatte relativ zum Werkzeughalter zu erreichen ist in weiterer vorteilhafter Ausgestaltung der Erfindung vorgesehen, dass die Stirnflächen im Bereich der Unterseite einen als Anschlag dienenden Absatz aufweisen. In diesem Fall wird nicht die zum Zerspanen genutzte Schneide als (Tiefen-)Anschlag der Schneidplatte im Werkzeughalter genutzt, sondern der beanspruchte Absatz. Dadurch ist erstens eine präzisere Positionierung der Schneidplatte relativ zum Werkzeughalter möglich und es ist möglich, die zweite Schneide dieser Schneidplatte auch dann noch zu nutzen, wenn die erste Schneide abgebrochen sein sollte.

Weitere Vorteile und vorteilhafte Ausgestaltungen der Erfindung sind der nachfolgenden Zeichnung, deren Beschreibung und den Schutzansprüchen entnehmbar.

Es zeigen:
- Figur 1: eine Draufsicht auf eine herkömmliche Schneidplatte zum Stechdrehen,
- Figur 2: eine Ansicht von Vorne auf eine Schneidplatte zum Stechdrehen nach dem Stand der Technik,
- Fig. 3 - 5: Ausführungsbeispiele erfindungsgemäßer Schneidplatten zum Kopierdrehen und
- Fig. 6 u. 7: die erfindungsgemäßen Schneidplatten zum Kopierdrehen, eingesetzt in einen Werkzeughalter.

### Beschreibung der Ausführungsbeispiele

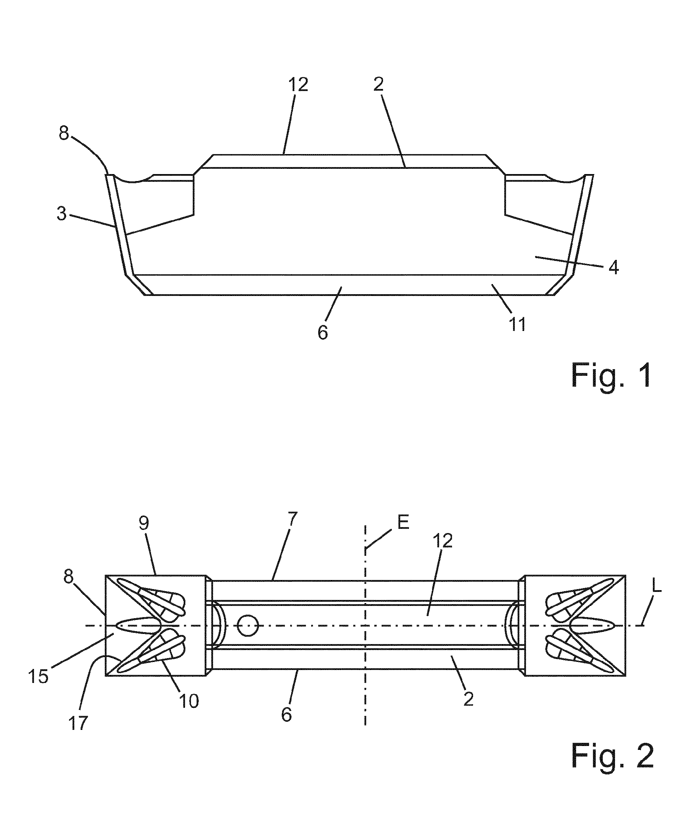

Beginnend mit den Figuren 1 und 2 wird zunächst eine Schneidplatte 1 zum Stechdrehen nach dem Stand der Technik beschrieben.

In der Figur 1 ist die Schneidplatte 1 in einer Seitenansicht dargestellt.
In Figur 2 ist die Schneidplatte 1 in einer Draufsicht auf ihre Oberseite 2 dargestellt. Die Schneidplatte 1 ist als Wende-Schneidplatte ausgebildet. Das heißt, sie ist zu einer Mittelebene E spiegelsymmetrisch ausgebildet. Des Weiteren ist sie auch bezüglich einer Längsachse bzw. einer Längsebene L spiegelsymmetrisch ausgebildet.

Die Schneidplatte 1 weist einen Grundkörper 4 auf, der die Oberseite 2, eine Unterseite 5, zwei sich gegenüberliegende und schräg verlaufende Seitenflächen 6 und 7 sowie zwei schräg verlaufende sich gegenüberliegende Stirnflächen 3 umfasst. Wegen der Symmetrie zur Mittelebene E ist lediglich eine Stirnfläche 3 in den Figuren 1 und 2 dargestellt.

Eine Schnittkante zwischen der Oberseite 2 und der Stirnfläche 3 bildet eine Hauptschneide 8, an die sich beidseitig Nebenschneiden 9 und 10 anschließen.

Die Nebenschneiden 9 und 10 werden jeweils durch die Schnittlinie zwischen einer Seitenfläche 6 bzw. 7 und der Oberseite 2 gebildet. Die Nebenschneiden 9 und 10 erstrecken sich annähernd parallel zur Längsebene L des Grundkörpers. Sie verlaufen nicht genau parallel zur Längsebene L, damit die von der Hauptschneide 3 beabstandeten Bereiche der Nebenschneiden 9 und 10 beim Stechdrehen frei sind. Eine Spanfläche 15, hat, wie aus Figur 2 ersichtlich, eine komplexe Geometrie.

Diese Schneidplatte ist unter der Produktbezeichnung P92 bzw. P92P der Gebrauchsmusterinhaberin Kemmer Hartmetallwerkzeuge GmbH am Markt verfügbar.

Für die beanspruchte Erfindung von Bedeutung ist, dass bei diesem Ausführungsbeispiel die Spanfläche 15 in dem Bereich unmittelbar hinter der Schneidkante 8 als konkave Vertiefung ausgebildet ist. Dadurch ergibt sich eine Kante 17, die die Schnittkante zwischen der konkaven Vertiefung in der Spanfläche 15 und dem übrigen Teil der Spanfläche ist.

Erfindungsgemäß ist nun bei diesem Ausführungsbeispiel vorgesehen, diese Kante 17 zu einer weiteren Schneide auszubilden. Dies wird dadurch erreicht, dass ein großer Teil der Spanfläche 15, die Hauptschneide 8 und auch der Großteil der Nebenschneide 9 durch Schleifen entfernt werden.

Die Nebenschneide 10 bleibt stehen und entlang der Kante 17 bildet sich eine weitere Schneide 17 stehen.

Die in diesem Bereich ohnehin vorhandene Konturierung und Gestaltung der Spanfläche 15 bleibt unverändert erhalten und dient auch beim Kopierdrehen einer guten Spanbildung und unterstützt damit ein leistungsfähiges Kopierdrehen.

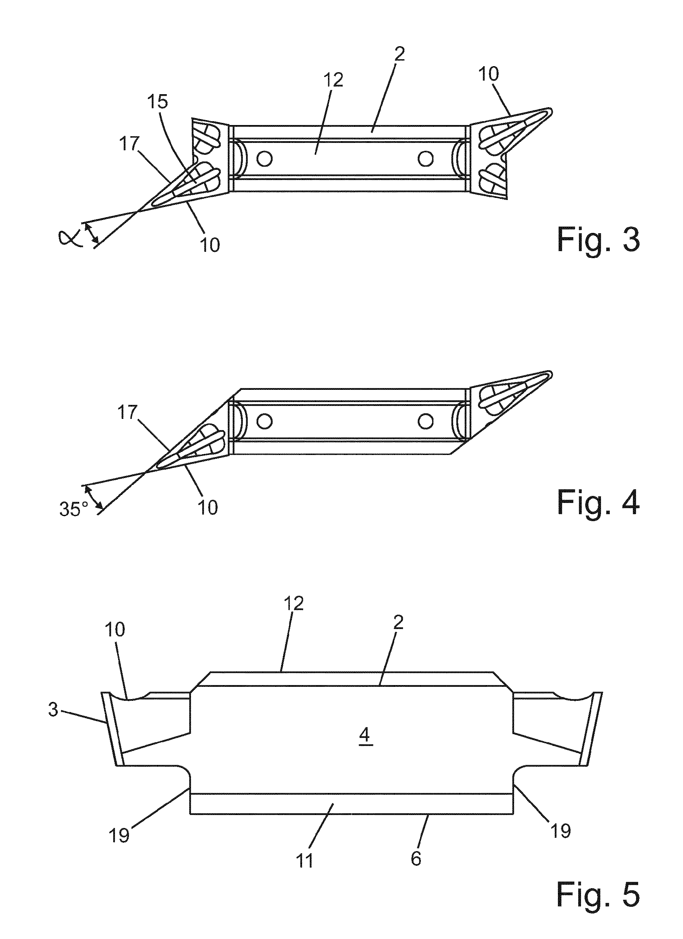

Aus dem Vergleich der Figuren 2 und 3 wird deutlich, dass eine herkömmliche Schneidplatte zum Stechdrehen durch das erfindungsgemäße Umschleifen zu einer Schneidplatte zum Kopierdrehen umgearbeitet werden kann. Ein Winkel α zwischen der stehengebliebenen Nebenschneide 10, die nunmehr die Funktion einer Hauptschneide übernimmt, und der weiteren Schneide 17 beträgt im dargestellten Ausführungsbeispiel 35°. Dieser Winkel ist kompatibel mit nach ISO genormten Schneidplatten zum Kopierdrehen.

In Figur 4 ist eine zweite optionale Art der Umarbeitung einer Schneidplatte gemäß Figur 2 zu einer erfindungsgemäßen Schneidplatte zum Kopierdrehen dargestellt. Bei diesem Ausführungsbeispiel wird mehr Material abgeschliffen, sodass sich die weitere Schneide 17 bis zur Seite 7 der Schneidplatte erstreckt. Bei dieser Variante ist die Bearbeitung einfacher, allerdings muss mehr Material abgetragen werden.

Vorteilhaft an dieser Variante ist, wegen des erhöhten Materialabtrags, dass dieses Ausführungsbeispiel "schlanker baut" und daher in manchen Anwendungsfällen anwendungstechnische Vorteile bietet.

In Figur 5 ist ein weiteres Ausführungsbeispiel einer erfindungsgemäßen Schneidplatte dargestellt.

Der wesentliche Unterschied gegenüber den Ausführungsbeispielen gemäß der Figuren 1 bis 4 ist darin zu sehen, dass die Stirnflächen 3 im Bereich der Unterseite 6 der Schneidplatte einen nach hinten zurückspringenden Absatz 19 aufweisen. Dieser Absatz 19 dient der exakten Positionierung der Schneidplatte 1 in einem nicht dargestellten Werkzeughalter, selbst wenn die Schneide 10 oder die weitere Schneide 17 abgebrochen sein sollten.

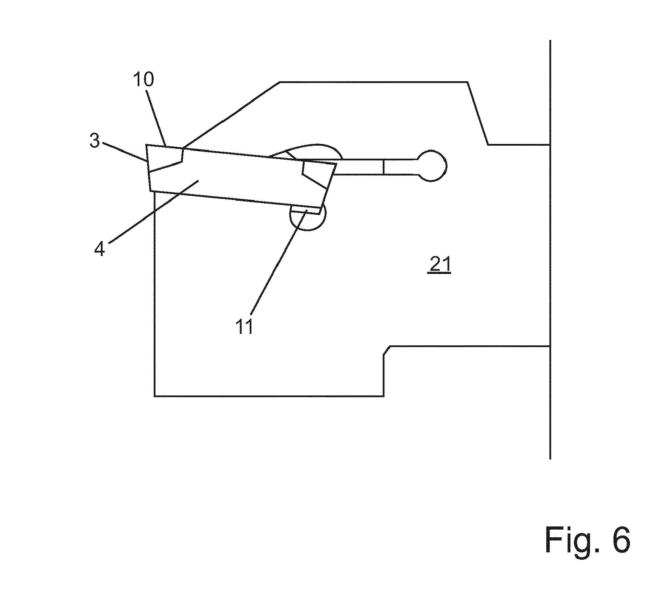

In Figur 6 ist eine erfindungsgemäße Schneidplatte 1 gemäß dem in Figur 3 dargestellten Ausführungsbeispiel dargestellt, wie sie in einen Werkzeughalter 21 geklemmt ist. Die Klemmung erfolgt über die Spannrippe 12 und die V-förmigen Abschrägungen 11 an der Schneidplatte 1 sowie entsprechend geformten Nuten im Werkzeughalter 21.

Diese Art der Spannung ist aus dem Stand der Technik, insbesondere durch die Produktreihe P92 der Gebrauchsmusterinhaberin bekannt und bewährt. Dass die erfindungsgemäße Schneidplatte 1 zum Kopierdrehen diesen am Markt bestens eingeführten Werkzeughalter 21 nutzen kann, ist eine der Vorteile der erfindungsgemäßen Schneidplatte 1.

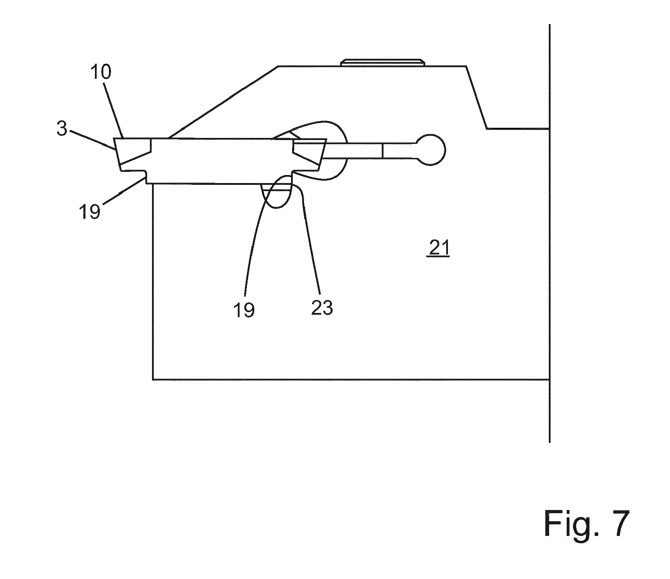

In Figur 7 ist die Aufnahme und Klemmung einer Schneidplatte gemäß Figur 5 in einem Werkzeughalter 21 dargestellt. Der Werkzeughalter 21 weist einen Vorsprung 23 auf, der zusammen mit dem Absatz 19 an der Unterseite 6 der Schneidplatte einen Anschlag bildet und dadurch die Positionierung der Schneidplatte 1 im Werkzeughalter 21 noch präziser als bei dem Ausführungsbeispiel gemäß Figur 6 macht.

Bei dem Ausführungsbeispiel gemäß Figur 6 erfolgt die Positionierung der Schneidplatte über die Stirnfläche 3. Weil diese Stirnfläche 3 bei der erfindungsgemäßen Schneidplatte 1 sehr klein ist und auch die Schneide 10 bzw. die weitere Schneide 17 ausbrechen kann, ist diese Positionierung nicht von allerhöchster Präzision.

Für hochpräzise Anwendungen ist die in Figur 7 dargestellte Variante mit einem Absatz 19 in der Schneidplatte und einem Vorsprung 23 im Werkzeughalter zu bevorzugen.

## Patentansprüche

1. Schneidplatte (1) zum Kopierdrehen mit einem Grundkörper (4), zwei Seitenflächen (6, 7), einer Oberseite (2), einer Unterseite (5) und zwei Stirnflächen (3), wobei eine Hauptschneide (8) durch die Schnittkante zwischen der Oberseite (2) und einer Stirnfläche (3) gebildet wird, wobei die Nebenschneiden (9, 10) zumindest näherungsweise parallel zu einer Längsachse der Schneidplatte () verlaufen, **dadurch gekennzeichnet, dass** in einem Winkel (α) zu einer Nebenscheide (9, 10) eine weitere Schneide (17) vorhanden ist, und dass ein Schnittpunkt zwischen Nebenschneide (9, 10) und weiterer Schneide (17) im Bereich der Schnittkante zwischen der Oberseite (2) und der Stirnfläche (3) liegt.

2. Schneidplatte nach Anspruch 1, **dadurch gekennzeichnet, dass** die weitere Schneide (17) durch Schleifen aus einer Schneidplatte zum Stechdrehen herausgearbeitet ist.

3. Schneidplatte nach Anspruch 1 oder 2, **dadurch gekennzeichnet, dass** der Winkel (α) kleiner 60 ° ist und bevorzugt gleich 55°, gleich 35° oder gleich 25° ist.

4. Schneidplatte nach einem der vorhergehenden Ansprüche, **dadurch gekennzeichnet, dass** an beiden Enden der Schneidplatte (1) erfindungsgemäße Schneiden (10, 17) zum Kopierdrehen ausgebildet sind.

5. Schneidplatte nach einem der vorhergehenden Ansprüche, **dadurch gekennzeichnet, dass** an der Oberseite (2) eine Spannrippe (12) ausgebildet ist.

6. Schneidplatte nach einem der vorhergehenden Ansprüche, **dadurch gekennzeichnet, dass** an der Unterseite (6) eine V-förmige Kontur (11) ausgebildet ist.

7. Schneidplatte nach einem der vorhergehenden Ansprüche, **dadurch gekennzeichnet, dass** die Stirnflächen (3) im Bereich der Unterseite (6) einen als Anschlag dienenden Absatz (19) aufweisen.

8. Schneidplatte nach einem der vorhergehenden Ansprüche, **dadurch gekennzeichnet, dass** die Schneidplatte (1) aus Hartmetall oder Cermet besteht.
